# EUROPEAN PATENT APPLICATION

(11) **EP 1 830 595 A1**
(43) Date of publication of application: **05.09.2007**
(21) Application number: 05816711.5
(22) Date of filing: 19.12.2005
(51) Int. Cl.: H04Q 7/38

(54) **ACCESS NETWORK SYSTEM, BASE STATION DEVICE, NETWORK CONNECTION DEVICE, MOBILE TERMINAL, AND AUTHENTICATION METHOD**

(30) Priority: 21.12.2004 JP 2004369227
(71) Applicant: MATSUSHITA ELECTRIC INDUSTRIAL CO., LTD., Osaka 571-8501 (JP)
(72) Inventor: YOKOBORI, Michiru c/o Matsushita Electric Industrial, Osaka-shi, Osaka 540-6319 (JP); KAWAKAMI, Tetsuya c/o Matsushita Electric Industrial, Osaka-shi, Osaka 540-6319 (JP); SUZUKI, Yoshihiro c/o Matsushita Electric Industrial, Osaka-shi, Osaka 540-6319 (JP)
(74) Representative: Pautex Schneider, Nicole Véronique
(86) International application number: PCT/JP2005/023263
(87) International publication number: WO 2006/068088

(57) **Abstract**

A technology for providing an access network system that can reduce the load of a connection authentication of a connection to an access network, upon dividing authentication into the connection authentication of the connection to the access network and a connection authentication of a connection to an external IP network, is disclosed. According to the technology, a first base station device 104a and a second base station device 104b are included. The first base station device is connected to a mobile node 101. The first base station device receives a first authentication request from the mobile node, transmits the first authentication request to an authentication device 102, and receives a first authentication result from the authentication device. The second base station device is newly connected to the mobile node by movement of the mobile node after the mobile node and the first base station device are connected. The second base station device receives a second authentication request including identifying information of the first base station device from the mobile node and transmits the second authentication request to the first base station device. Upon receiving the second authentication request, the first base station device transmits the first authentication result to the second base station device.

## Description

### TECHNICAL FIELD

The present invention relates to an access network system performing a connection authentication of case of a network connection, a base station device configuring the access network system, a network connection device that can be connected to the base station device, a mobile node, and an authentication method.

### BACKGROUND ART

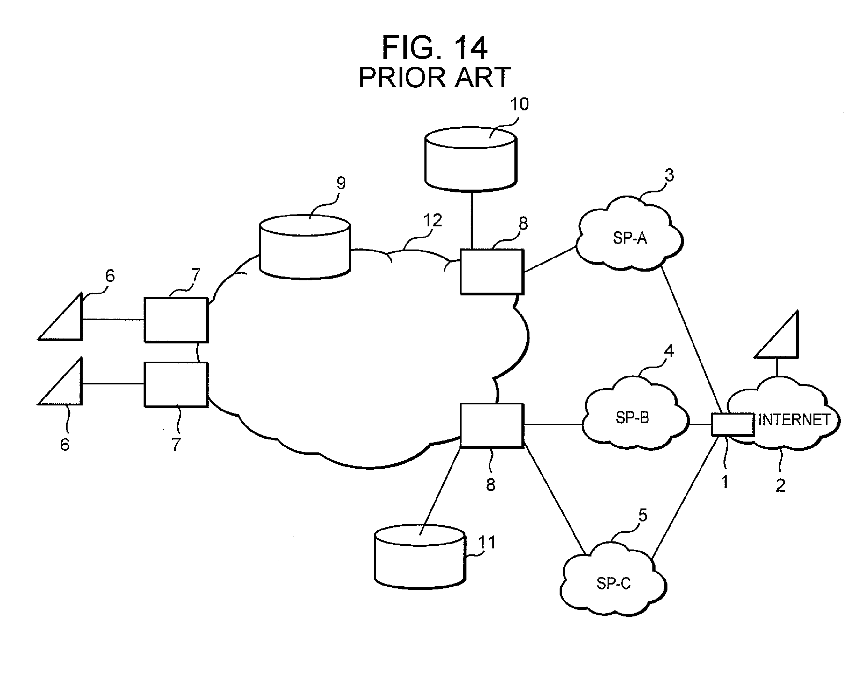

In recent years, data communication services represented by the internet connection service have become popular. A network configuration of a popular conventional data communication service will be explained with reference to Fig. 14. As shown in Fig. 14, in a conventional network system, a customer-premises equipment (CPE) 6 at a user's home is connected to an access gateway (AGW) 7, owned by an access circuit provider. The access gateway 7 is connected to a service provider A (SP-A) 3, a service provider B (SP-B) 4, and a service provider C (SP-C) 5, via a network 12 and a relay gateway (RGW) 8, owned by the access circuit provider. The service provider A 3, the service provider B 4, and the service provider C 5 are connected to the internet 2, via a point of interface (IX) 1. A SP connection control server 9 is provided within the network 12, owned by the access circuit provider. An authentication server 10 of the service provider A 3 is connected to the relay gateway 8, connected to the service provider A 3. An authentication server 11 of the service provider B 4 and the service provider C 5 is connected to the relay gateway 8, connected to the service provider B 4 and the service provider C 5. A conventional network system such as this is disclosed in Patent Document 1, below.
Patent Document 1: Japanese Patent Application Publication No. 2004-32253 (Fig. 1)

However, in the conventional network system, connectivity is achieved between the access gateway 7 and the relay gateway 8 through one-to-one correspondence for each terminal, which is the customer-premises equipment 6. Simultaneous connections to a plurality of service providers 3, 4, and 5 cannot be made from one terminal. In addition, route designation is performed between the access gateway 7 and the relay gateway 8 using a routing header. Therefore, an increase in the header occurs, and interoperability between IPv4 and IPv6 becomes difficult. Furthermore, a connection authentication of a connection to a network, in particular, is always performed by the authentication server. Therefore, load dispersal is difficult.

### DISCLOSURE OF THE INVENTION

The present invention has been achieved to solve the above-described problems. An object of the present invention is to provide an access network system in which, upon dividing connection authentication into a connection authentication of a connection to the access network and a connection authentication of a connection to an external internet protocol (IP) network, the load of the connection authentication of the connection to the access network can be reduced, a base station device configuring the access network system, a network connection device that can be connected to the base station device, a mobile node, and an authentication method.

In order to achieve the above-described object, according to the present invention, the access network system including a plurality of base station devices and an authentication device is provided. The plurality of base stations can be connected with a mobile node through wireless communication. The authentication device authenticates a connection of the mobile node to a network. The access network system includes a first base station device and a second base station device. The first base station device is connected to the mobile node. The first base station device receives a first authentication request from the mobile node, transmits the first authentication request to the authentication device, and receives a first authentication result from the authentication device. The second base station device is newly connected to the mobile node by movement of the mobile node, after the mobile node and the first base station device are connected. The second base station device receives a second authentication request including identifying information of the first base station device from the mobile node and transmits the second authentication request to the first base station device. Upon receiving the second authentication request, the first base station device transmits the first authentication result to the second base station device. As a result of the configuration, the load of the connection authentication of the connection to the access network can be reduced.

In addition, in the access network system of the present invention, a preferred aspect of the present invention is that, when the first authentication result has a predetermined validity period, the first base station device judges whether the validity period has expired. When the validity period has not expired, the first base station device transmits the first authentication result to the second base station device. When the expiration has expired, the first base station device transmits an authentication request to the authentication device and transmits a second authentication result, received from the authentication device, to the second base station device. As a result of the configuration, the authentication device is not required to know which wireless base station device has a cache of authentication results. Therefore, the authentication device does not need to manage the position of the mobile node, and the load of managing a vast amount of authentication results can be reduced.

In addition, in the access network system of the present invention, a preferred aspect of the present invention is that, when the first authentication result does not have a predetermined validity period, the first base station device transmits the first authentication result to the second base station device and identifying information of the second base station device in the second authentication request, to which the second base station device has included its own identifying information, to the authentication device. As a result of the configuration, a notification can be issued from the authentication device to the wireless base station device. Therefore, the tracking of changes in the information of the mobile node and the like due to contract changes and the like can be achieved.

In addition, in the access network system of the present invention, a preferred aspect of the present invention is that, after the first authentication result or the second authentication result is transmitted to the second base station device, the first base station device deletes the first authentication result or the second authentication result. As a result of the configuration, hardware resources can be efficiently used.

In addition, in the access network system of the present invention, a preferred aspect of the present invention is that, after the first authentication result is transmitted to the second base station device, the first base station device deletes the first authentication result. As a result of the configuration, hardware resources can be efficiently used.

In addition, in the access network system of the present invention further including a connection station device connected to an external IP network to relay communication between the mobile node and correspondent nodes on the external IP network and having a path between the base station device and the connection station device, a preferred aspect of the present invention is that, when the second base station device that has received the first authentication result or the second authentication result transmits information stating that a connection to the network is possible to the mobile node and receives a connection request for obtaining permission to connect with the external IP network from the mobile node, the second base station device generates identifying information of a path between the mobile node and the second base station device itself, corresponding to a path to the external IP network to which the connection is desired. The second base station device transmits the generated identifying information of the path to the mobile node. As a result of the configuration, simultaneous connections to a plurality of service providers can be made from one mobile node.

In addition, in the access network system of the present invention, a preferred aspect of the present invention is that, when a packet including the generated identifying information of the path is received from the mobile node, the second base station device judges whether the identifying information of the path is valid identifying information assigned to an authenticated mobile node. Based on the result, the second base station device forwards the packet to the external IP network. As a result of the configuration, only the packet to be transmitted can be forwarded.

In addition, according to the present invention, a base station device, among the base station devices of the access network system including a plurality of base station devices that can be connected to a mobile node through wireless communication and an authentication device authenticating a connection of the mobile node to a network, is provided of which a connection is terminated as a result of a movement of the mobile node. The base station device includes a receiving means, a transmitting means, a storing means, and a controlling means. The receiving means receives information. The transmitting means transmits information. The storing means stores a first authentication result obtained by the authentication device based on a first authentication request from the mobile node. The controlling means controls processes performed within the base station device itself. The receiving means receives a second authentication request from a base station device the mobile node has newly connected to. The transmitting means transmits the first authentication result stored in the storing means to the base station device the mobile node has newly connected to, based on the received second authentication request. As a result of the configuration, the load of the connection authentication of the connection to the access network can be reduced.

In addition, in the base station device of the present invention, a preferred aspect of the present invention is that, when the first authentication result has a predetermined validity period, the controlling means judges whether the validity period has expired. When the controlling means judges that the validity period has not expired, the transmitting means transmits a first authentication result to the base station device the mobile node has newly connected to. When judged that the validity period has expired, the transmitting means transmits an authentication request to the authentication device and transmits a second authentication result received from the authentication device, via the receiving means, to the base station device the mobile node has newly connected to. As a result of the configuration, the authentication device is not required to know which wireless base station device has a cache of the authentication results. Therefore, the authentication device does not need to manage the position of the mobile node, and the load of managing a vast amount of authentication results can be reduced.

In addition, in the base station device of the present invention, a preferred aspect of the present invention is that, when the first authentication result does not have a predetermined validity period, the transmitting means transmits the first authentication result to the base station device the mobile node has newly connected to and identifying information which the base station device the mobile node has newly connected to inserts in the second authentication request to the authentication device. As a result of the configuration, a notification can be issued from the authentication device to the wireless base station device. Therefore, the tracking of changes in the information of the mobile node and the like due to contract changes and the like can be achieved.

In addition, in the base station device of the present invention, a preferred aspect of the present invention is that, after the transmitting means transmits the first authentication result or the second authentication result to the base station device the mobile node has newly connected to, the controlling means deletes the first authentication result or the second authentication result. As a result of the configuration, hardware resources can be efficiently used.

In addition, in the base station device of the present invention, a preferred aspect of the present invention is that, after the transmitting means transmits the first authentication result to the base station device the mobile node has newly connected to, the controlling means deletes the first authentication result. As a result of the configuration, hardware resources can be efficiently used.

In addition, according to the present invention, a base station device, among base station devices in an access network system including a plurality of base station devices that can be connected to a mobile node through wireless communication, an authentication device authenticating a connection of the mobile node to a network, and a connection station device connected to an external IP network to relay communication between the mobile node and correspondent nodes on the external IP network, and having a path between the base station device and the connection station device, of which a connection is made as a result of a movement of the mobile node. The base station device includes a receiving means, a transmitting means, a storing means, and a controlling means. The receiving means receives information. The transmitting means transmits information. The storing means stores information. The controlling means controls processes performed within the base station device. When the receiving means receives a first authentication result obtained by the authentication device from a previous connection party base station device, based on an authentication request made to the previous connection party base station device before the movement of the mobile node, or a second authentication result obtained by re-authentication performed by the authentication device when the validity period of the first authentication result having a validity period has expired, the transmitting means transmits information stating that a connection to the network is possible to the mobile node. The controlling means generates identifying information of a path between the mobile node and the base station device itself, corresponding to a path to the external IP network to which the connection is desired, as a result of a connection request for obtaining permission to connect with the external IP network received from the mobile node, via the receiving means. The transmitting means transmits the generated identifying information of the path to the mobile node. As a result of the configuration, simultaneous connections to a plurality of service providers can be made from one mobile node.

In addition, in the base station device of the present invention, a preferred aspect of the present invention is that the controlling means judges whether the identifying information of the path in a packet including the generated identifying information of the path received from the mobile node, via the receiving means, is valid identifying information assigned to an authenticated mobile node. Based on the result, the transmitting means forwards the packet to the external IP network. As a result of the configuration, only the packet to be transmitted is forwarded.

In addition, according to the present invention, a network connection device that can be wirelessly connected to an access network system including a plurality of base station devices is provided. The access network system includes an authentication device, a first base station device, and a second base station device. The authentication device authenticates a connection of the network connection device to a network. The first base station device is connected to the network connection device. The first base station device receives a first authentication request from the network connection device, transmits the first authentication request to the authentication device, and receives a first authentication result from the authentication device. The second base station device is newly connected to the network connection device by movement of the network connection device, after the network connection device and the first base station device are connected. The second base station device receives a second authentication request including identifying information of the first base station device from the network connection device, and transmits the second authentication request to the first base station device. In the access network system, upon receiving the second authentication request, the first base station device transmits the first authentication result to the second base station device. The network connection device includes a transmitting means for transmitting the second authentication request including the identifying information of the first base station device to the second base station device. As a result of the configuration, the load of the connection authentication of the connection to the access network can be reduced. In addition, as a result of connection to a device having no network connection functions, the device can be given a network connection function.

In addition, in the network connection device of the present invention, a preferred aspect of the present invention is that the network connection device further includes a receiving means for receiving the first authentication result for the second authentication request from the second base station device. After the receiving means receives the first authentication result from the second base station device, the transmitting means transmits a connection request to an external IP network to the second base station device. The receiving means receives the identifying information of a path between the second base station device and the network connection device from the second base station device. The identifying information has been generated by the second base station device based on the connection request. After the receiving means receives the identifying information of the path, the transmitting means transmits a connection authentication request for the connection to the external IP network, including the identifying information of the path, to the second base station device. As a result of the configuration, the second base station device can appropriately set the path to the external IP network, and simultaneous connections can be made to a plurality of service providers from one network connection device.

In addition, according to the present invention, a mobile node includes the above-described network connection device. As a result of the configuration, the load of the connection authentication of the connection to the access network can be reduced.

In addition, according to the present invention, an authentication method is provided in an access network system including a plurality of base stations that can be connected to a mobile node through wireless communication and an authentication device authenticating a connection of the mobile node to a network. The access network system includes a first base station device and a second base station device. The first base station device is connected to the mobile node. The first base station device receives a first authentication request from the mobile node, transmits the first authentication request to the authentication device, and receives a first authentication result from the authentication device. The second base station device is newly connected to the mobile node by movement of the mobile node, after the mobile node and the first base station device are connected. The second base station device receives a second authentication request including identifying information of the first base station device from the mobile node, and transmits the second authentication request to the first base station device. The authentication method includes a step at which the first base station device transmits the first authentication result to the second base station device upon receiving the second authentication request. As a result of the configuration, the load of the connection authentication of the connection to the access network can be reduced.

In addition, in the authentication method of the present invention, a preferred aspect of the present invention is that a step is included at which, when the first authentication result has a predetermined validity period, the first base station device judges whether the validity period has expired. When the validity period has not expired, the first base station device transmits the first authentication result to the second base station device. When the validity period has expired, the first base station device transmits an authentication request to the authentication device and transmits a second authentication result received from the authentication device to the second base station device. As a result of the configuration, the authentication device is not required to know which wireless base station device has a cache of the authentication results . Therefore, the authentication device does not need to manage the position of the mobile node, and the load of managing a vast amount of authentication results can be reduced

In addition, in the authentication method of the present invention, the preferred aspect of the present invention is that a step is included at which, when the first authentication result does not have a predetermined validity period, the first base station device transmits the first authentication result to the second base station device and identifying information of the second base station device in the second authentication request to which the second base station device has included its own identifying information, to the authentication device. As a result of the configuration, a notification can be issued from the authentication device to the wireless base station device. Therefore, the tracking of changes in the information of the mobile node and the like due to contract changes and the like can be achieved.

In addition, in the authentication method of the present invention, a preferred aspect of the present invention is that a step is included at which, after the first authentication result or the second authentication result is transmitted to the second base station device, the first base station device deletes the first authentication result or the second authentication result. As a result of the configuration, hardware resources can be efficiently used.

In addition, in the authentication method of the present invention, a preferred aspect of the present invention is that a step is included at which, after the first authentication result is transmitted to the second base station device, the first base station device deletes the first authentication result. As a result of the configuration, hardware resources can be efficiently used.

In addition, in the authentication method of the present invention, a preferred aspect of the present invention is that the authentication method is in an access network system further including a connection station device connected to an external IP network to relay the communication between the mobile node and correspondent nodes on the external IP network and having a path between the base station device and the connection station device.
The authentication method includes a step at which, when the second base station device that has received the first authentication result or the second authentication result transmits information stating that a connection to the network is possible to the mobile node and receives a connection request for obtaining permission to connect with the external IP network from the mobile node, the second base station device generates identifying information of a path between the mobile node and the second base station device itself, corresponding to a path to the external IP network to which the connection is desired. The second base station device transmits the generated identifying information of the path to the mobile node. As a result of the configuration, simultaneous connections to a plurality of service providers can be made from one mobile node.

In addition, in the authentication method of the present invention, a preferred aspect of the present invention is that a step is included at which, when a packet including the generated identifying information of the path is received from the mobile node, the second base station device judges whether the identifying information of the path is valid identifying information assigned to an authenticated mobile node. Based on the result, the second base station device forwards the packet to the external IP network. As a result of the configuration, only the packet to be transmitted can be forwarded.

The access network system, the base station devices, the network connection device, the mobile node, and the authentication method of the present invention have the above-described configuration. The load of the connection authentication of the connection to the access network can be reduced, upon the connection authentication being divided into the connection authentication of the connection to the access network and the connection authentication of the connection to the external IP network.

### BRIEF DESCRIPTION OF THE DRAWINGS

Fig. 1 is a block diagram for explaining a configuration of an access network system according to an embodiment of the present invention;
Fig. 2 is a diagram for explaining a remote path and a local path in the access network system according to the embodiment of the present invention;
Fig. 3 is a sequence chart for explaining a connection authentication of a connection to an access network and a connection authentication of a connection to an internet service provider (ISP) network in the access network system according to the embodiment of the present invention;
Fig. 4 is a sequence chart for explaining an example of an authentication after a movement of a mobile node that can be connected to a wireless base station device in the access network system according to the embodiment of the present invention;
Fig. 5 is a sequence chart for explaining another example of an authentication after a movement of a mobile node that can be connected to a wireless base station device in the access network system according to the embodiment of the present invention;
Fig. 6 is a block diagram for explaining a configuration of the wireless base station device according to the embodiment of the present invention;
Fig. 7 is a flowchart for explaining an operational flow of the wireless base station device during the connection authentication of the connection to the access network in the access network system according to the embodiment of the present invention;
Fig. 8 is a flowchart for explaining an operational flow of the wireless base station device before a movement of the mobile node, among the wireless base station devices according to the embodiment of the present invention;
Fig. 9 is a flowchart for explaining another example of an operational flow of the wireless base station device before a movement of the mobile node, among the wireless base station devices according to the embodiment of the present invention;
Fig. 10 is a flowchart for explaining an operational flow of a wireless base station of a connection party after a movement of the mobile device, among the wireless base station devices according to the embodiment of the present invention;
Fig. 11 is a flowchart for explaining another example of the operational flow of the wireless base station of the connection party after a movement of the mobile device, among the wireless base station devices according to the embodiment of the present invention;
Fig. 12 is a flowchart for explaining an operational flow of the mobile node performing communication by connecting to the wireless base station device of the access network system according to the embodiment of the present invention;
Fig. 13 is a flowchart for explaining an example of an operational flow of the mobile node when the mobile node according to the embodiment of the present invention is connected to the wireless base station device of the next connection party as a result of movement; and
Fig. 14 is a diagram for explaining a network configuration in a conventional data communication service.

### BEST MODE FOR CARRYING OUT THE INVENTION

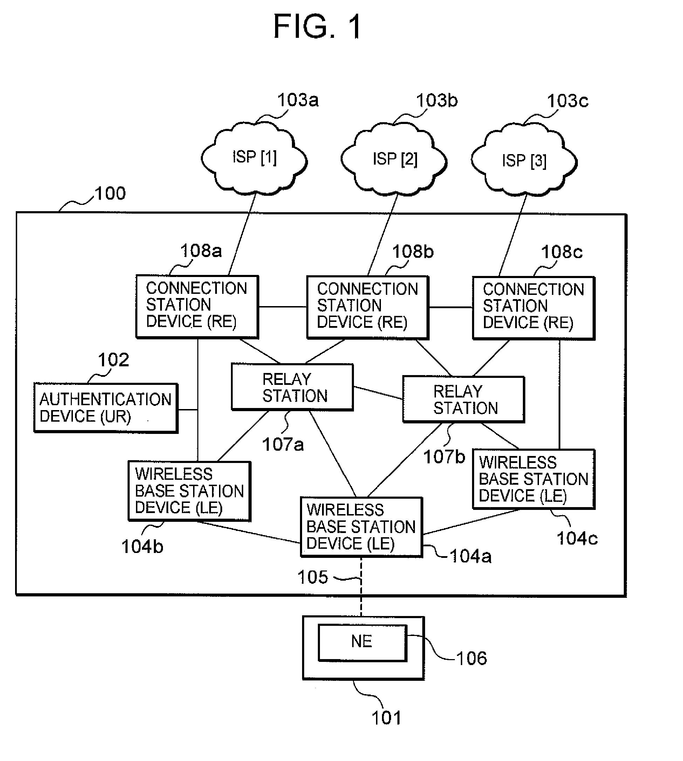

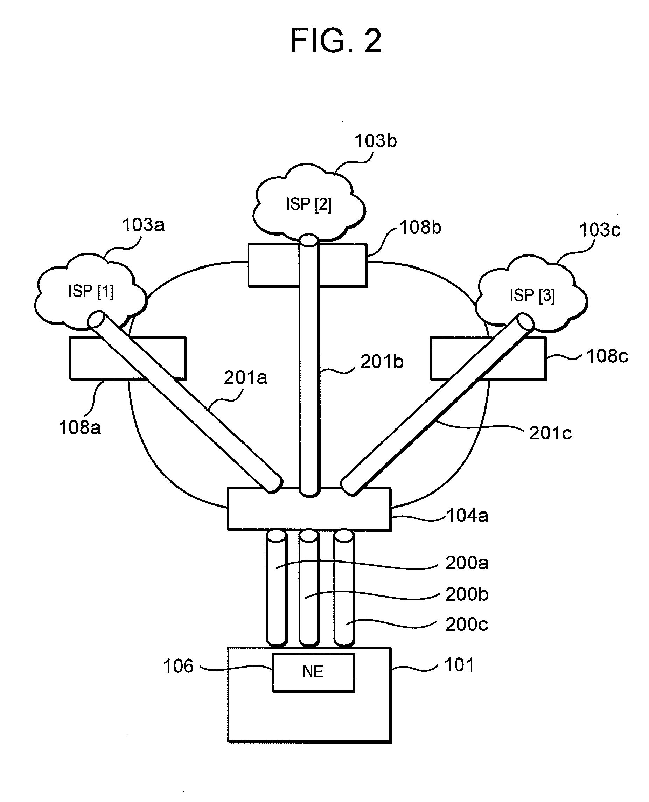

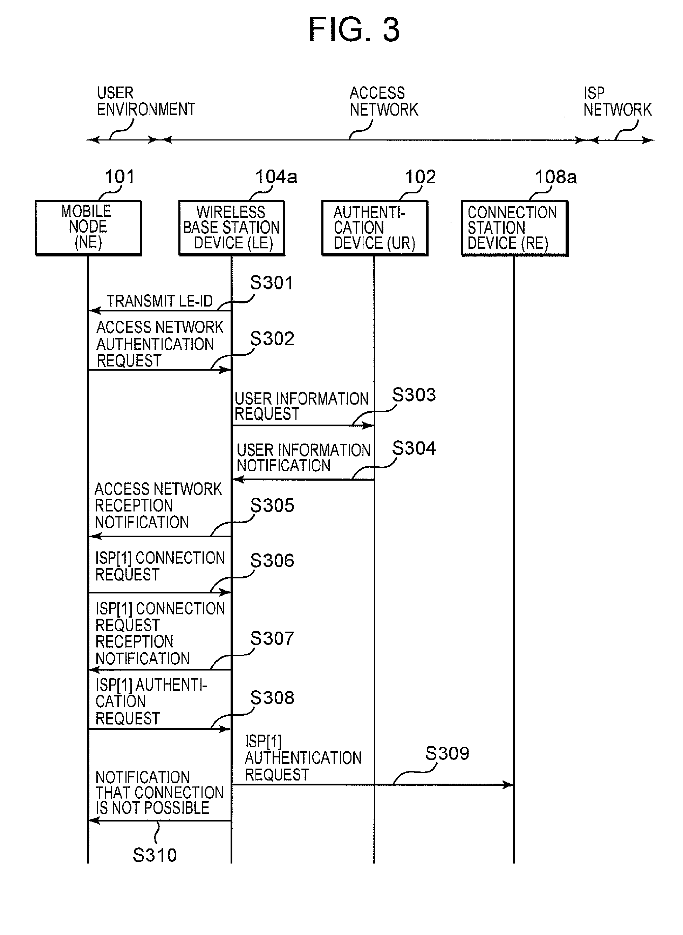

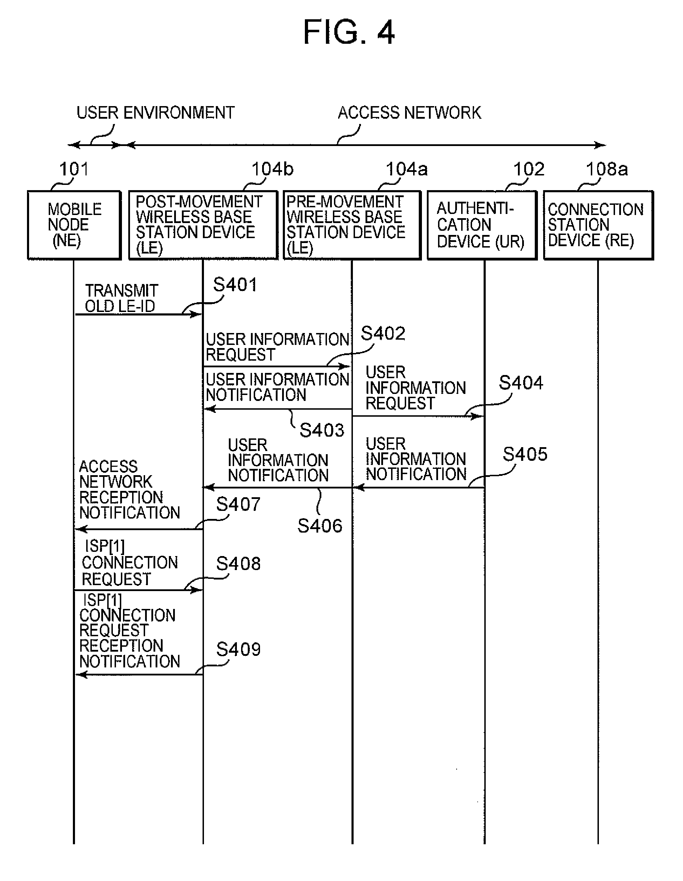

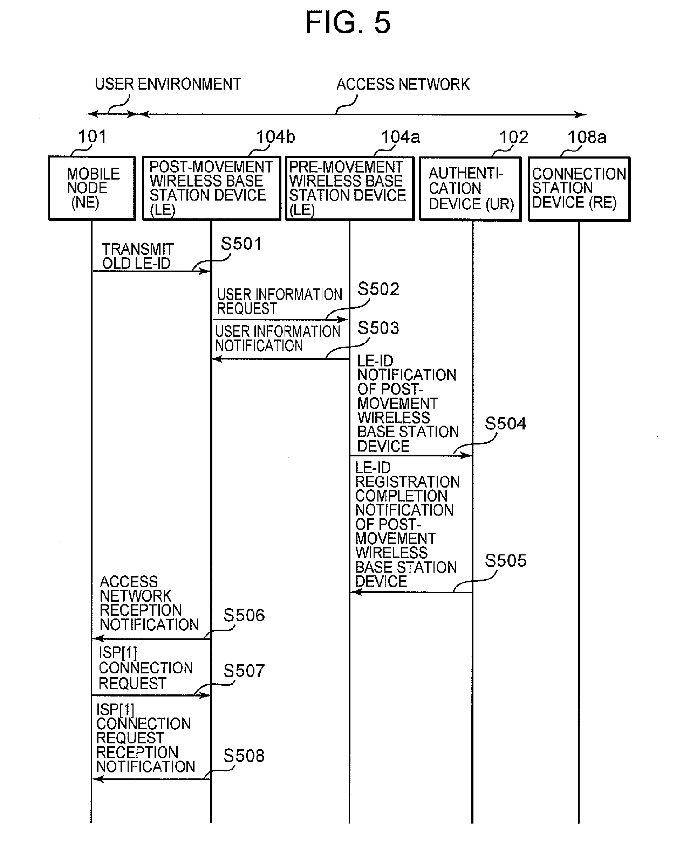

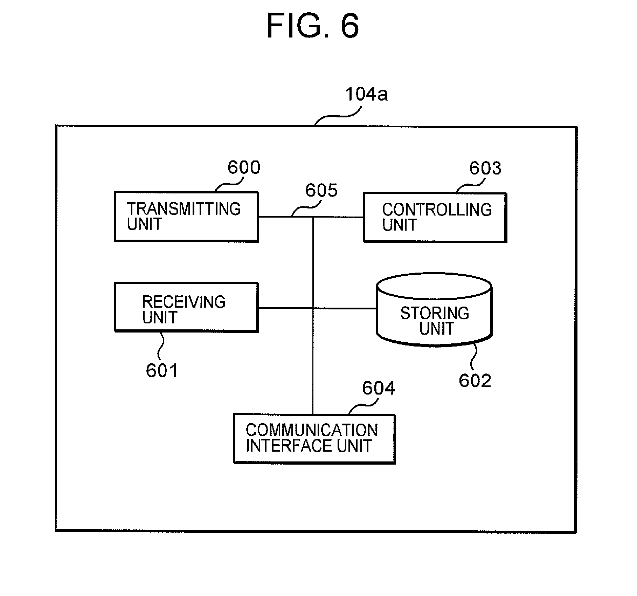

Hereinafter, an access network system, a wireless base station device, and a mobile node that can be connected to the wireless base station device according to an embodiment of the present invention will be explained with reference to Fig. 1 to Fig. 13 . Fig. 1 is a block diagram for explaining a configuration of the access network system according to the embodiment of the present invention. Fig. 2 is a diagram for explaining a remote path and a local path in the access network system according to the embodiment of the present invention. Fig. 3 is a sequence chart for explaining a connection authentication of a connection to an access network and a connection authentication of a connection to an ISP network in the access network system according to the embodiment of the present invention. Fig. 4 is a sequence chart for explaining an example of an authentication after a movement of the mobile node that can be connected to the wireless base station device in the access network system according to the embodiment of the present invention. Fig. 5 is a sequence chart for explaining another example of an authentication after a movement of the mobile node that can be connected to the wireless base station device in the access network system according to the embodiment of the present invention. Fig. 6 is a block diagram for explaining a configuration of the wireless base station device according to the embodiment of the present invention.

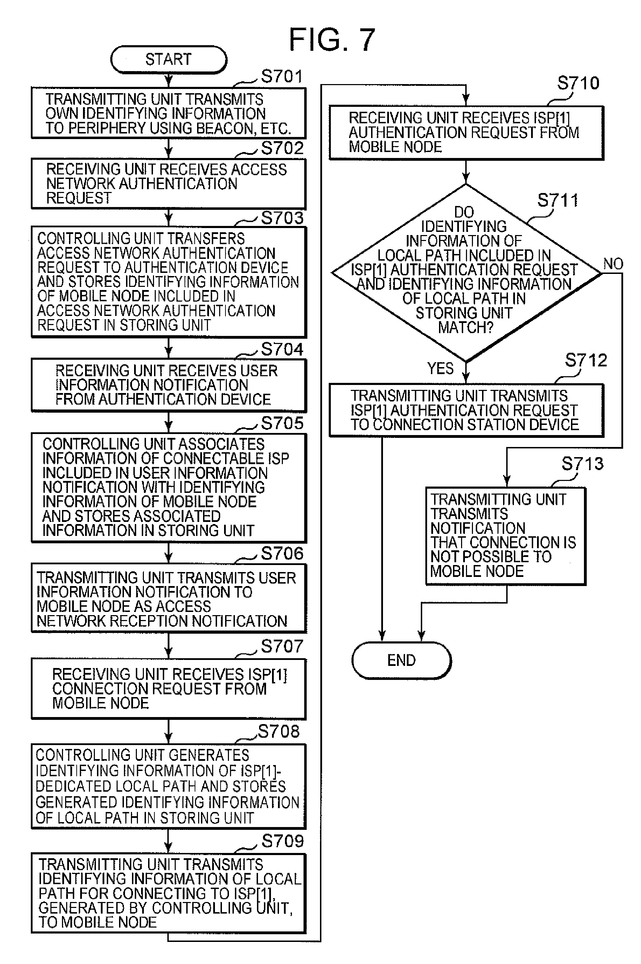

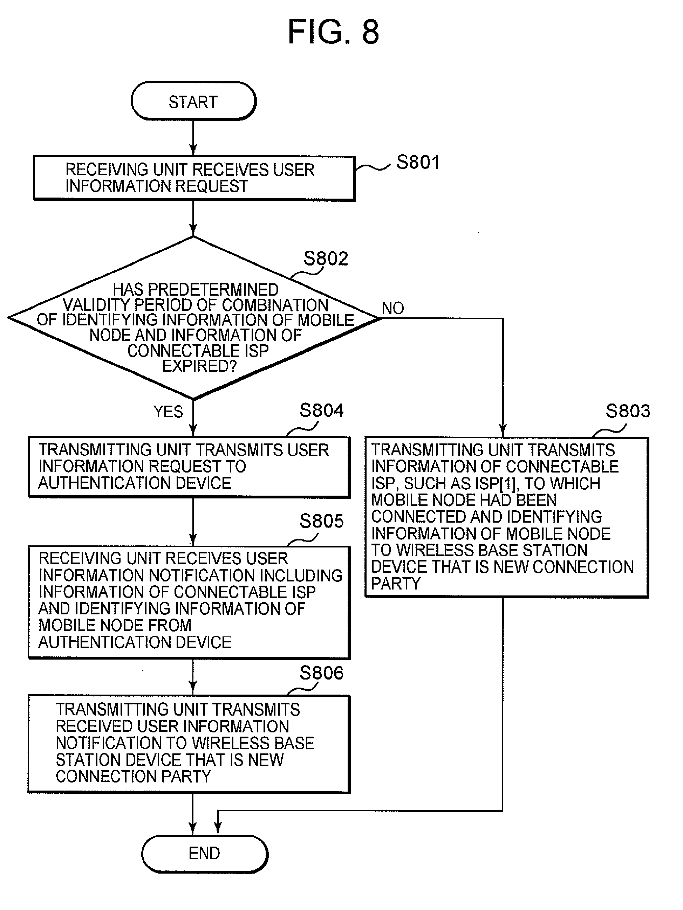

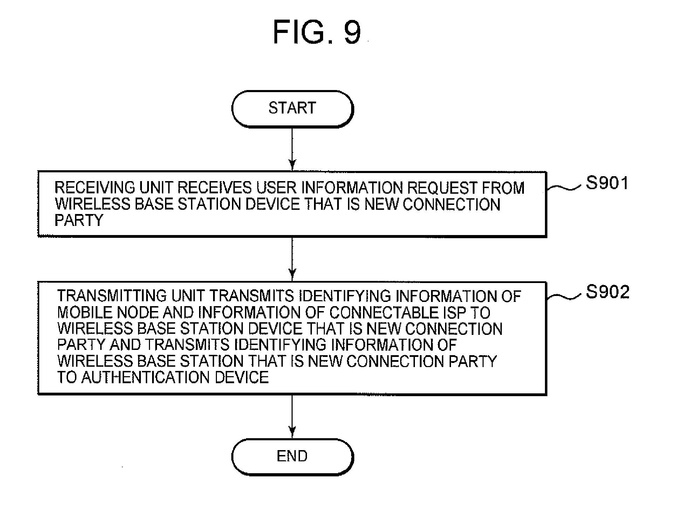

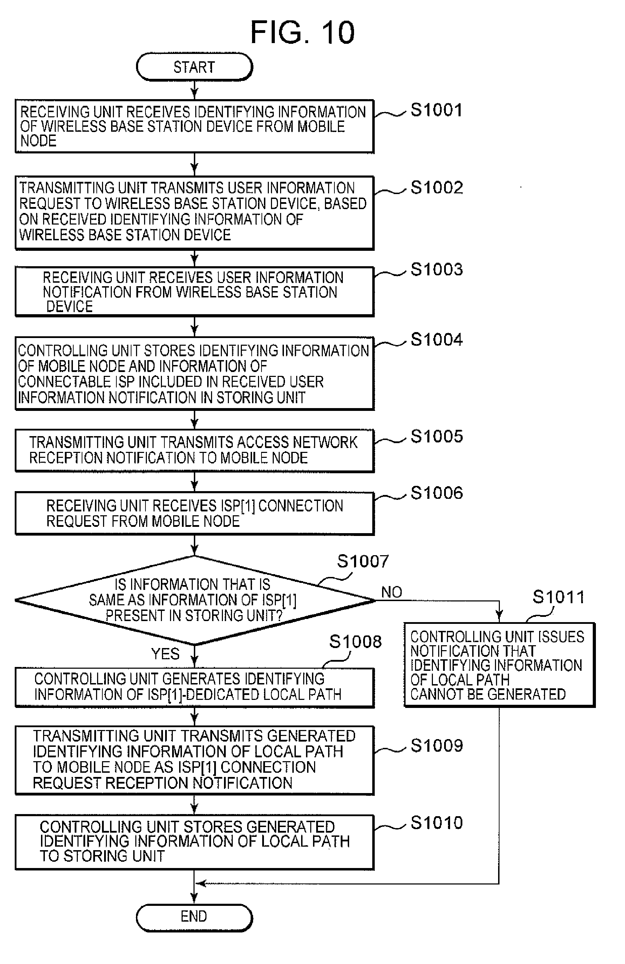

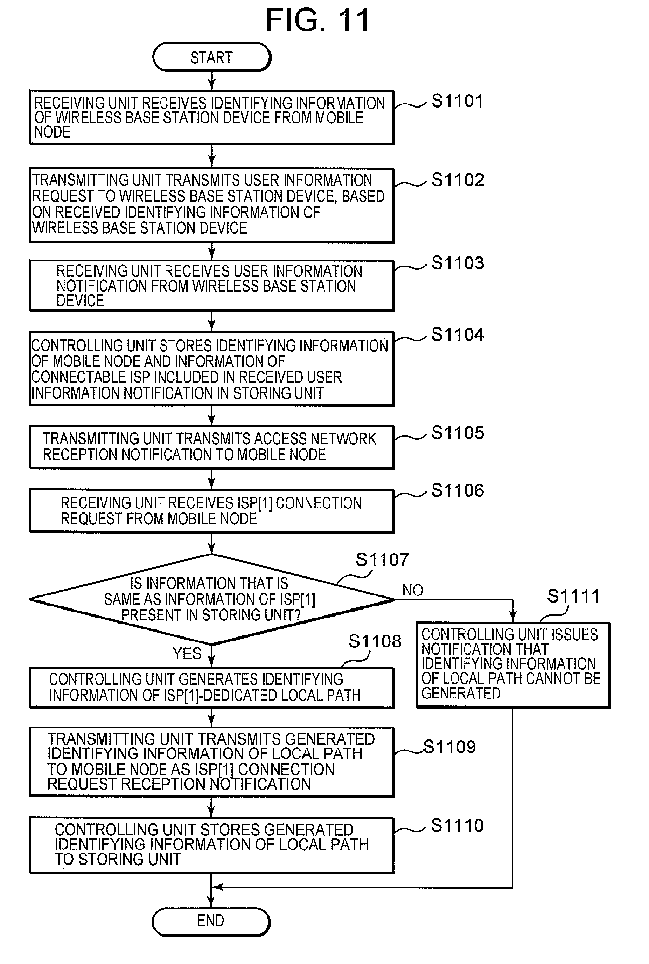

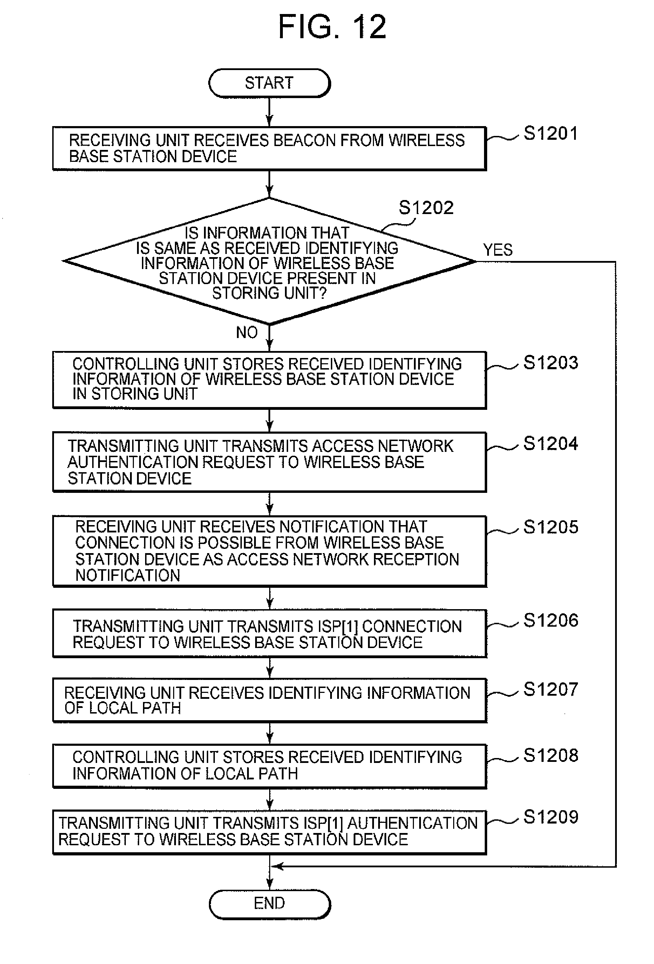

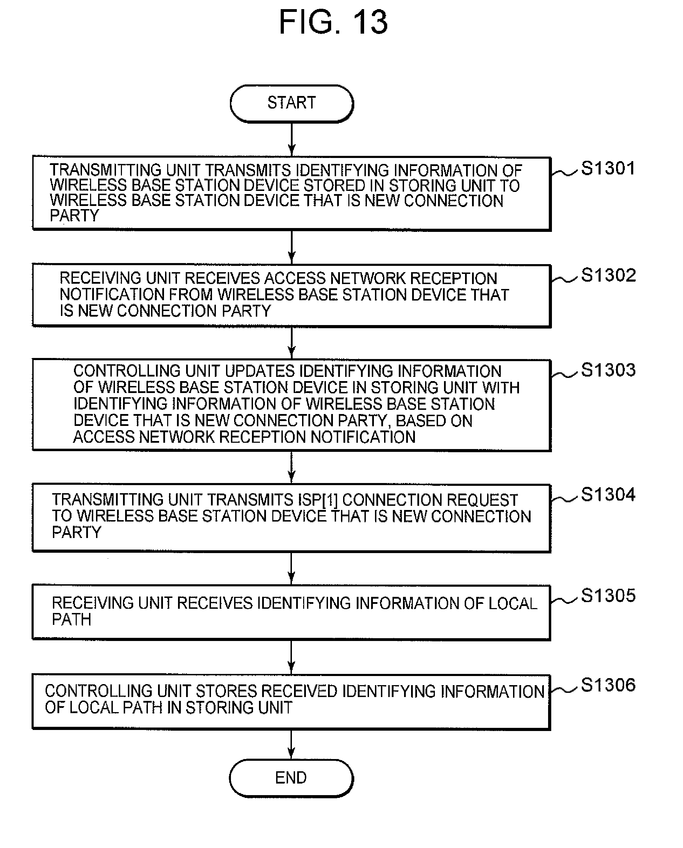

Fig. 7 is a flowchart for explaining an operational flow of the wireless base station device during the connection authentication of the connection to the access network in the access network system according to the embodiment of the present invention. Fig. 8 is a flowchart for explaining an operational flow of the wireless base station device before a movement of the mobile node, among the wireless base station devices according to the embodiment of the present invention. Fig. 9 is a flowchart for explaining another example of an operational flow of the wireless base station device before a movement of the mobile node, among the wireless base station devices according to the embodiment of the present invention. Fig. 10 is a flowchart for explaining an operational flow of a wireless base station of a connection party after movement of the mobile device, among the wireless base station devices according to the embodiment of the present invention. Fig. 11 is a flowchart for explaining another example of the operational flow of the wireless base station of the connection party after movement of the mobile device, among the wireless base station devices according to the embodiment of the present invention. Fig. 12 is a flowchart for explaining an operational flow of the mobile node performing communication by connecting to the wireless base station device of the access network system according to the embodiment of the present invention. Fig. 13 is a flowchart for explaining an example of an operational flow of the mobile node when the mobile node according to the embodiment of the present invention is connected to the wireless base station device of the next connection party as a result of movement.

First, the access network system according to the embodiment of the present invention will be described with reference to Fig. 1. As shown in Fig. 1, an access network system 100 includes wireless base station devices (LE: Local Edge) 104a to 104c, an authentication device (UR: User Registrar) 102, connection station devices (RE: Remote Edge) 108a to 108c, and relay stations 107a and 107b. The access network system 100 is connected to ISP [1] 103a to ISP [3] 103c, via the connection station devices 108a to 108c. A mobile node 101 communicates with correspondent nodes (not shown) of the ISP[1]103a to ISP[3]103c by connecting with the wireless base station devices 104a to 104c. In the example shown in Fig. 1, the mobile node 101 is connected to the wireless base station device 104a by a wireless link 105. The mobile node 101 communicates with the wireless base station device 104a, via a Nomadic Edge (NE) 106 that is a network connection device. The NE 106 is a communication interface, of which a plurality can be provided. The NE 106 is equivalent to the above-described network connection device. Although the NE 106 is included in the mobile node 101 in Fig. 1, the NE 106 can be configured separately from the mobile node 101.

A path is configured between the mobile node 101 and the wireless base station device 104a, using a virtual local area network (VLAN) for each ISP[1] 103a to ISP[3] 103c. Hereafter, the path is referred to as a VLAN path. However, this is limited to ISP that is under a contract with the mobile node 101. This will be described hereafter. Hereafter, the wireless base station device 104a is given as an example in the explanation of the wireless base station device. However, the same applies to the wireless base station device 104b and the wireless base station device 104c as to the wireless base station device 104a. Therefore, explanations regarding the wireless base station device 104b and the wireless base station device 104c are omitted.

The wireless base station device 104a is positioned at an edge of an access network in the access network system 100. The wireless base station device 104a is a wireless base station device to which the mobile node 101 is connected, to allow the mobile node 101 to communicate with the communication party (not shown) of the ISP[1] 103a to ISP[3] 103c. The wireless base station device 104a performs binding with a local path between the mobile node 101 and the wireless base station device 104a and a remote path between the wireless base station device 104a and the ISP[1] 103a to ISP [3] 013c. The wireless base station device 104a performs a swap of the VLAN tag, which is an IEEE802.1q technology.

The local path refers to a VLAN path used to allow the NE 106 to notify the wireless base station device 104a of the ISP[1] 103a to ISP[3] 103c to which connection will be performed, using the VLAN tag. The remote path is a VLAN path connecting the wireless base station device 104a and the connection station devices 108a to 108c. The remote path is a VLAN path that is fixed in advance within the access network. In other words, as shown in Fig. 2, local paths 200a to 200c are paths connecting the mobile node 101 and the wireless base station device 104a. Remote paths 201a to 201c are paths connecting the wireless base station device 104a and the ISP [1] 103a to ISP [3] 103c. A connection party is changed by a VLAN tag attached to a packet being changed. The VLAN tag used to construct the local paths 200a to 200c can be referred to as a local tag. The VLAN tag used when the connection party of the remote paths 201a to 201c is changed can be referred to as a remote tag.

The relay stations 107a and 107b relay packets forwarded between the wireless base station devices 104a to 104c and the connection station devices 108a to 108c. The number of relay stations 107a and 107b is not limited to the amount shown in Fig. 1. The connection station devices 108a to 108c are positioned on an edge of the access network and are connected to the ISP [1] 103a to ISP[3] 103c side.

The authentication device 102 stores user information of a user of the mobile node 101 in a predetermined storing area within the authentication device 102 itself. The authentication device 102 is a server performing a connection authentication of a connection of the mobile node 101 to the access network. The user information refers to information associating, for example, identifying information used to identify the user (mobile node 101) and information related to the ISP with which the user is under a connection contract.
Movement of the mobile node 101 in the access network system according to the embodiment of the present invention is movement between connection points connecting with a wide-area network, such as hot spots, companies, and homes. Hand-over is not performed. Communication is always completed before movement, and communication while in motion is not performed.

Next, the connection authentication of the connection of the mobile node 101, which performs communication by connecting to the wireless base station device in the access network system according to the embodiment of the present invention, to the access network and the connection authentication of the connection of the mobile node 101 to the ISP network will be explained with reference to Fig. 3.
As shown in Fig. 3, the wireless base station device, such as the wireless base station device 104a, transmits LE-ID to the mobile node 101 using, for example, a beacon (Step S301). The LE-ID is the identifying information of the wireless base station.device 104a itself. The wireless base station device 104a can periodically transmit the LE-ID. In Fig. 3, the wireless base station device 104a transmits the identifying information of the wireless base station device 104a itself to the mobile node 101. However, in actuality, the wireless base station device 104a transmits the identifying information of the wireless base station device 104a itself to an unspecified periphery of the wireless base station device 104a itself, using the beacon. In Fig. 3, an instance is shown in which the transmitted identifying information of the wireless base station device 104a is received by the mobile node 101.

The mobile node 101 that has received the identifying information (LE-ID) stores identifying information used to identify the mobile node 101 and identifying information of wireless base station devices to which a connection had been made in the past in a storing area (not shown) of the mobile node 101 itself. The mobile node 101 judges whether the received identifying information (LE-ID) of the wireless base station device 104a is the same as the identifying information (LE-ID) of a wireless base station device stored in the storing area. When judged that the identifying information are not the same, the mobile node 101 stores the received identifying information (LE-ID) of the wireless base station device 104a in the storing area. The mobile node 101 also transmits an access network authentication request to the wireless base station device 104a (Step S302) for the authentication device 102 to perform authentication of whether the mobile node 101 can be connected to the access network, to allow the mobile node 101 to communicate with the communication party (not shown) on the ISP network side. A packet of the access network authentication request includes the received identifying information (LE-ID) of the wireless base station device 104a and the identifying information of the mobile node 101 stored in the storing area.

The wireless base station device 104a forwards the access network authentication request received from the mobile node 101 to the authentication device 102 as a user information request (Step S303) . The wireless base station device 104a also stores the identifying information of the mobile node 101 included in the access network authentication request to a storing unit 602, described hereafter. The authentication device 102 judges whether the mobile node 101 that has transmitted the access network authentication request is a mobile node under contract with the ISP and can connect to the access network, based on the identifying information of the mobile node 101 included in the received user information request, the identifying information of the mobile node 101 stored in the predetermined storing area of the authentication device 102 itself, and information of the ISP with which the mobile node 101 is under contract. When judged that the connection is possible, the authentication device 102 issues a user information notification that the connection is possible to the wireless base station device 104a (Step S304). The user information notification includes information of the connectable ISP. In addition, when a combination of the identifying information of the mobile node 101 and the information of the connectable ISP does not have a validity period, as described hereafter, the authentication device 102 associates the identifying information of the mobile node 101 and the information of the connectable ISP with the identifying information of the wireless base station device 104a and stores the associated information in the predetermined storing area.

Based on the notification that the connection can be made, the wireless base station device 104a associates the information of the connectable ISP with the identifying information of the mobile node 101 stored in the storing unit 602 and stores the associated information. The wireless base station device 104a also transmits the notification that the connection can be made to the mobile node 101 as an access network reception notification (Step S305). Based on the received access network reception notification, the mobile node 101 transmits, for example, an ISP [1] connection request including information of the ISP[1] 103a, to which the connection is desired, to the wireless base station device 104a (Step S306). Based on the received ISP[1] connection request, the wireless base station device 104a judges whether information that is the same as the information of the ISP [1] 103a included in the received ISP[1] connection request is present in the storing unit 602 storing the information of the connectable ISP. When judged that the information is present, the wireless base station device 104a generates identifying information (also referred to, hereinafter, as VLAN-ID) of a path dedicated to the ISP[1] 103a, to which the connection is desired. The path is laid between itself (wireless base station device 104a) and the mobile node 101. The wireless base station device 104a transmits the generated identifying information of the path to the mobile node 101 as an ISP [1] connection request reception notification (Step S307). The wireless base station device 104a also stores the generated identifying information of the path in the storing unit 602.

The mobile node 101 stores the received identifying information of the local path to the predetermined storing area. In addition, the mobile node 101 selects the identifying information of the path (local tag), attaches the local tag, and transmits an ISP [1] authentication request to the wireless base station device 104a for the authentication device (not shown) on the ISP[1] 103a side to perform authentication of whether the connection to the ISP[1] 103a, corresponding to the selected identifying information (local tag) of the local path, can be made (Step 5308). The ISP[1] authentication request includes the selected identifying information of the local path. According to the present embodiment, the identifying information of the path held by the message at Step S308 is the local tag generated by the wireless base station device 104a to correspond with the remote path to the ISP [1] 103a. At this time, the NE 106 can include the identifying information of the path in the ISP [1] authentication request. The wireless base station device 104a judges whether the identifying information of the local path included in the received ISP [1] authentication request and the identifying information of the local path stored in the storing unit 602 match. When judged that the identifying information match, the wireless base station device 104a transmits the ISP[1] authentication request to the connection station device 108a (Step 5309) . The ISP [1] authentication request includes the identifying information of the remote path within the access network laid between the wireless base station device 104a itself and the connection station device 108a connected to the ISP [1] 103a corresponding to the identifying information of the local path. In other words, the wireless base station device 104a transmits ISP[1] authentication request attached ISP [1] remote tag to the connection station device 108a. At the same time, when judged that the identifying information do not match, the wireless base station device 104a transmits a notification that the connection is not possible to the mobile node 101 (Step S310). The connection station device 108a removes the ISP[1] remote tag from the received ISP[1] authentication request and switches to an ISP[1] authentication circuit. As a result of the above, connection authentications of the connections to respective networks can be performed.

When the mobile node 101 that has once received the connection authentication of the connection to the access network moves, the request for a connection authentication to the authentication device 102 being issued again, after the movement, causes a reduction in the efficiency of the use of network resources. Therefore, the access network system according to the embodiment of the present invention is configured so that, when the mobile node 101 moves to another wireless base station device after connection to the wireless base station device, the connection authentication can be performed without the authentication device 102 being made to perform the connection authentication each time. Hereafter, the configuration is described with reference to Fig. 4 and Fig. 5. There are two patterns in the connection authentication after movement. In a first pattern, a validity period is provided to a combination of the identifying information of the mobile node 101 and the information of the connectable ISP stored (also referred to, hereinafter, as cached) by the wireless base station devices 104a to 104c. In a second pattern, a validity period is not provided to the combination of the identifying information of the mobile node 101 and the information of the connectable ISP stored by the wireless base station devices 104a to 104c.

First, the first pattern or, in other words, the connection authentication performed when the validity period is provided will be described with reference to Fig. 4 . When the mobile node 101 is connected to a wireless base station device of a new connection party, such as the wireless base station device 104b (also referred to, hereinafter, as a post-movement wireless base station device) (equivalent to the above-described second base station device), from the wireless base station device to which the mobile node 101 had been connected, such as the wireless base station device 104a (also referred to, hereinafter, as a pre-movement wireless base station device) (equivalent to the above-described first wireless base station device), as a result of movement, the mobile node 101 transmits the identifying information (old LE-ID) of the pre-movement wireless base station device 104a stored in the predetermined storing area to the post-movement wireless base station device 104b (Step 5401). The ISP [1] connection request at Step S408, described hereafter, can be simultaneously performed at Step S401. As a result, processing steps can be reduced and connection with the communication party of the external ISP can be made more quickly.

Based on the received identifying information of the pre-movement wireless base station device 104a, the post-movement wireless base station device 104b transmits a user information request to the pre-movement wireless base station device 104a (Step S402). The user information request is an acquisition request for information of the connectable ISP and includes the identifying information of the mobile node 101. Based on the received user information request, when the combination of the identifying information of the mobile node 101 and the information of the connectable ISP associated and stored in the storing unit 602 has a predetermined validity period, the pre-movement wireless base station device 104a judges whether the validity period has expired. When judged that the validity period has not expired, the pre-movement wireless base station device 104a transmits the information of the connectable ISP to which the mobile node 101 had been connected and the identifying information of the mobile node 101 to the post-movement base station device 104b as a user information notification (Step S403). When judged that the validity period has expired, the pre-movement wireless base station device 104a transmits a user information request to the authentication device 102 for whether the mobile node 101 can connect to the access network to perform communication with the communication party (not shown) on the ISP side (Step 5404) . The user information request includes the identifying information of the mobile node 101.

Based on the identifying information of the mobile node 101 included in the received user information request, and the identifying information of the mobile node 101 and the information on the ISP with which the mobile node 101 is under contract stored in the predetermined storing area, the authentication device 102 judges whether the mobile node 101, which is a subject of the user information request, is a mobile node under contract with the ISP and can connect to the access network. When judged that the connection is possible, the authentication device 102 issues a user information notification to the pre-movement wireless base station device 104a (Step S405). The user information notification includes the information of the connectable ISP and the identifying information of the mobile node 101. The pre-movement wireless base station device 104a forwards the received user information notification to the post-movement wireless base station device 104b (Step S406).

The post-movement wireless base station device 104b stores the received identifying information of the mobile node 101 and information of the connectable ISP in the predetermined storing area. The post-movement wireless base station device 104b also transmits an access network reception notification to the mobile node 101 (Step S407). The access network reception notification includes the identifying information of the post-movement wireless base station device 104b and the information of the connectable ISP. Based on the received access network reception notification, the mobile node 101 updates the identifying information of the pre-movement base station device 104a stored in the predetermined storing area with the identifying information of the post-movement base station device 104b. The mobile node 101 also selects, for example, the ISP[1] 103a that is a connectable ISP as the connection party and transmits the ISP [1] connection request to the post-movement wireless base station device 104b (Step S408). The ISP[1] connection request includes the information of the ISP[1] 103a to which the connection is desired.

The post-movement wireless base station device 104b judges whether information that is the same as the information of the ISP[1] 103a included in the received ISP[1] connection request is present in the predetermined storing area storing the information of the connectable ISP. When judged that the information is present, the post-movement wireless base station device 104b generates identifying information (VLAN-ID) of the local path dedicated to the ISP[1]103a to which the connection is desired. The local path is laid between the post-movement wireless base station device 104 itself and the mobile node 101. The post-movement wireless base station device 104b transmits the generated identifying information (VLAN-ID) of the local path to the mobile node 101 as the ISP [1] connection request reception notification (Step S409). The post-movement wireless base station device 104b also stores the generated identifying information (VLAN-ID) of the local path in the predetermined storing area. Then, the mobile node 101 stores the received identifying information (VLAN-ID) of the local path in the predetermined storing area. After transmitting the information of the connectable ISP and the identifying information of the mobile node 101 to the post-movement wireless base station device 104b, the pre-movement wireless base station device 104a can delete the information of the connectable ISP and the identifying information of the mobile node 101 stored in the storing unit 602. As a result of the above, the authentication device 102 is not required to know which wireless base station device has a cache of the identifying information of the mobile node and the information on the connectable ISP. Therefore, the authentication device 102 does not need to manage the position of the mobile node 101, and the load of managing vast amounts of identifying information of the mobile node and information of the connectable ISP can be reduced.

Next, the second pattern or, in other words, the connection authentication performed when the validity period is not provided will be described with reference to Fig. 5. When the mobile node 101 is connected to the post-movement wireless base station device 104b that is the new connection party, from the wireless base station device 104a that is the wireless base station device to which the mobile node 101 had been connected, as a result of movement, the mobile node 101 transmits the identifying information (old LE-ID) of the pre-movement wireless base station device 104a stored in the predetermined storing area to the post-movement wireless base station device 104b (Step S501).

Based on the received identifying information of the pre-movement wireless base station device 104a, the post-movement wireless base station device 104b transmits a user information request to the pre-movement wireless base station device 104a (Step S502). The user information request is an acquisition request for information of the connectable ISP and includes the identifying information of the post-movement wireless base station device 104b itself and the identifying information of the mobile node 101. Based on the received user information request, when the combination of the identifying information of the mobile node 101 and the information of the ISP to which the mobile node 101 can be connected, associated and stored in the storing unit 602, does not have a predetermined validity period, the pre-movement wireless base station device 104a transmits the identifying information of the mobile node 101 and the information of the ISP to which the mobile node 101 can be connected to the post-movement base station device 104b as a user information notification (Step S503). The pre-movement wireless base station device 104a also notifies the authentication device 102 of the identifying information (LE-ID) of the post-movement wireless base station device 104b included in the user information request (Step S504).

The authentication device 102 rewrites the identifying information of the pre-movement wireless base station device 104a stored in the predetermined storing area with the received identifying information of the post-movement wireless base station device 104b and stores the identifying information of the post-movement wireless base station device 104b in the predetermined storing area. The authentication device 102 also transmits an LE-ID registration completion notification to the pre-movement wireless base station device 104a (Step S505). The post-movement wireless base station device 104b stores the received identifying information of the mobile node 101 and the information of the connectable ISP in the predetermined storing area and transmits an access network reception notification to the mobile node 101 (Step 5506) . The access network reception notification includes the identifying information of the post-movement wireless base station device 104b and the information of the connectable ISP.

Based on the received access network reception notification, the mobile node 101 updates the identifying information of the pre-wireless base station device 104a stored in the predetermined storing area with the identifying information of the post-wireless base station device 104b. The mobile node 101 also selects, for example, the ISP[1] 103a that is a connectable ISP as the connection party and transmits an ISP [1] connection request to the post-movement wireless base station device 104b (Step 5507). The ISP[1] connection request includes the information of the ISP[1] 103a to which the connection is desired. The post-movement wireless base station device 104b judges whether information that is the same as the information of the ISP [1] 103a included in the received ISP [1] connection request is present in the predetermined storing area storing the information of the connectableISP. When judged that the information is present, the post-movement wireless base station device 104b generates the identifying information (VLAN-ID) of the local path dedicated to the ISP[1] 103a to which the connection is desired. The local path is laid between the post-movement wireless base station device 104b itself and the mobile node 101. The post-movement wireless base station device 104b transmits the generated identifying information (VLAN-ID) of the local path to the mobile node 101 as the ISP [1] connection request reception notification (Step S508). The post-movement wireless base station device 104b also stores the generated identifying information (VLAN-ID) of the local path in the predetermined storing area.

Then, the mobile node 101 stores the received identifying information (VLAN-ID) of the local path in the predetermined storing area. After transmitting the information of the connectable ISP and the identifying information of the mobile node 101 to the post-movement wireless base station device 104b, the pre-movement wireless base station device 104a can delete the information of the connectable ISP and the identifying information of the mobile node 101 stored in the storing unit 602. As a result of the above, a notification can be issued from the authentication device 102 to the wireless base station device. Therefore, the tracking of changes in the information of the connectable ISP and the like due to contract changes and the like can be achieved.

Next, the configuration of the wireless base station device according to the embodiment of the present invention will be described with reference to Fig. 6. Here, the description will be given with the wireless base station device 104a as an example. However, the same applies to the wireless base station device 104b and the wireless base station device 104c as to the wireless base station device 104a. As shown in Fig. 6, the wireless base station device 104a includes a transmitting unit 600, a receiving unit 601, the storing unit 602, a controlling unit 603, and a communication interface unit 604. The transmitting unit 600, the receiving unit 601, the storing unit 602, the controlling unit 603, and the communication interface unit 604 are connected by a bus 605. The wireless base station device 104a stores a control program for controlling operations performed by the wireless base station device 104a itself in the storing unit 602.

Next, an operational flow of the wireless base station device of case of the connection authentication of the connection to the access network in the access network system according to the embodiment of the present invention will be described with reference to Fig. 7. The transmitting unit 600 transmits the identifying information (LE-ID) of the wireless base station device, such as the wireless base station device 104a itself, stored in the storing unit 602, to the periphery, using the beacon or the like (Step S701). In this case, it is assumed that the mobile node 101 receives the identifying information (LE-ID) of the wireless base station device 104a itself. The receiving unit 601 receives the access network authentication request for whether the connection to the access network can be made from the mobile node 101 that has received the identifying information of the wireless base station device 104a transmitted by the transmitting unit 600, to allow the mobile node 101 to communicate with the communication party (not shown) on the ISP side (Step S702). The access network authentication request includes the identifying information of the mobile node 101 and the identifying information (LE-ID) of the wireless base station device 104a held by the mobile node 101 in advance.

The controlling unit 603 forwards the access network authentication request received by the receiving unit 601 to the authentication device 102 and stores the identifying information of the mobile node 101 included in the access network authentication request in the storing unit 602 (Step 5703) . After the authentication device 102 judges that the mobile node 101 can be connected to the access network based on the access network authentication request forwarded by the controlling unit 603, the receiving unit 601 receives the user information notification stating that the mobile node 101 can be connected to the access network (Step S704) from the authentication device 102. The user information notification includes the information of the connectable ISP.

The controlling unit 603 associates the information of the connectable ISP included in the received user information notification with the identifying information of the mobile node 101 stored in the storing unit 602 and stores the associated information in the storing unit 602 (Step 705). The transmitting unit 600 transmits the user information notification received by the receiving unit 601 to the mobile node 101 as the access network reception notification (Step S706). After the mobile node 101 judges connectable ISP based on the access network reception notification transmitted by the transmitting unit 600, the receiving unit 601 receives, for example, the ISP [1] connection request including information of the ISP [1] 103a, to which the connection is desired, from the mobile node 101 (Step 5707). The controlling unit 603 judges whether information that is the same as the information of the ISP [1] 103a, included in the ISP[1] connection request received by the receiving unit 601, is present in the storing unit 602 storing the information of the connectable ISP. When judged that the information is present, the controlling unit 603 generates the identifying information (VLAN-ID) of the local path dedicated to the ISP[1] 103a, to which the connection is desired, and stores the generated identifying information (VLAN-ID) of the local path in the storing unit 602 (Step S708). The local path is laid between the wireless base station device 104a itself and the mobile node 101.

The transmitting unit 600 transmits the identifying information (VLAN-ID) of the local path for connecting to the ISP[1] 103a, generated by the controlling unit 603, to the mobile node 101 (Step S709). The receiving unit 601 receives the ISP[1] authentication request from the mobile node 101 (Step S710). The ISP[1] authentication request includes the identifying information (VLAN-ID) of the local path transmitted by the transmitting unit 600. The controlling unit 603 judges whether the identifying information (VLAN-ID) of the local path included in the ISP[1] authentication request received by the receiving unit 601 and the identifying information (VLAN-ID) of the local path stored in the storing unit 602 match (Step 5711) . When the controlling unit 603 judges that the information match, the transmitting unit 600 transmits the ISP[1] authentication request to the connection station device 108a (Step S712) . The ISP [1] authentication request includes the identifying information of the remote path within the access network, laid between the wireless base station device 104a itself and the connection station device 108a connected to the ISP[1] 103a corresponding to the identifying information (VLAN-ID) of the local path. At the same time, when judge that the information do not match, the transmitting unit 600 transmits a notification that the connection is not possible to the mobile node 101 (Step S713).

Next, the operational flow of the wireless base station device (the wireless base station device 104a, for example) to which the mobile node 101 had been connected before movement when the mobile node 101 moves after connection to the wireless base station device will be explained with reference to Fig. 8 and Fig. 9. The operational flow includes the combination of the identifying information of the mobile node 101 and the information of the connectable ISP, stored in the wireless base station device 104a, is provided with a validity period and is not provided with the validity period. Hereafter, the wireless base station device 104a is given as an example in the explanation. However, the same applies to the wireless base station device 104b and the wireless base station device 104c as to the wireless base station device 104a. Therefore, explanations thereof are omitted. First, the operational flow of the wireless base station device when the combination of the identifying information of the mobile node 101 and the information of the connectable ISP is provided with the validity period will be described, with reference to Fig. 8.

When the connection with the wireless base station device 104a is terminated as a result of the mobile node 101 having moved, the receiving unit 601 receives the user information request from a new connection party wireless base station device, such as the wireless base station device 104b, that is the new connection party of the mobile node 101 (Step 5801). The user information request is an acquisition request for the information of the connectable ISP and includes the identifying information of the mobile node 101. Based on the user information request received by the receiving unit 601, when the combination of the identifying information of the mobile node 101 and the information of the connectable ISP associated and stored in the storing unit 602 has a predetermined validity period, the controlling unit 603 judges whether the validity period has expired (Step S802). When the controlling unit 603 judges that the validity period has not expired, the transmitting unit 600 transmits the information of a connectable ISP, such as the ISP [1] 103a, to which the mobile node 101 had been connected and the identifying information of the mobile node 101 to the wireless base station device 104b that is the new connection party (Step S803). When judged that the validity period has expired, the transmitting unit 600 transmits the user information request to the authentication device 102 for whether the mobile node 101 can connect to the access network to perform communication with the communication party (not shown) on the ISP side (Step S804). The user information includes the identifying information of the mobile node 101.

After the authentication device 102 judges that the mobile node 101 can connect to the access network based on the user information request transmitted by the transmitting unit 600, the receiving unit 601 receives the user information notification from the authentication device 102 (Step 5805) . The user information notification includes the information of the connectable ISP and the identifying information of the mobile node 101. The transmitting unit 600 transmits the user information notification received by the receiving unit 601 to the wireless base station device 104b that is the new connection party (Step S806). After the transmitting unit 600 transmits the identifying information of the mobile node 101 and the information of the connectable ISP to the wireless bas station device 104b, the controlling unit 603 can delete the identifying information of the mobile node 101 and the information of the connectable ISP. As a result of the above, the authentication device 102 is not required to know which wireless base station device has a cache of the identifying information of the mobile node and the information of the connectable ISP. Therefore, the authentication device 102 does not need to manage the position of the mobile node 101, and the load of managing vast amounts of identifying information of the connectable ISP and information of the connectable ISP can be reduced.

Next, the operational flow of the wireless base station device (wireless base station device 104a) when the combination of the identifying information of the mobile node 101 and the information of the connectable ISP is not provided with the validity period will be described with reference to Fig. 9. When the connection with the wireless base station device 104a is terminated as a result of the mobile node 101 having moved, the receiving unit 601 receives the user information request from the new connection party wireless base station device, such as the wireless base station device 104b, that is the new connection party of the mobile node 101 (Step 5901). The user information request is an acquisition request for the information of the connectable ISP and includes the identifying information of the wireless base station device 104b and the identifying information of the mobile node 101. Based on the user information request received by the receiving unit 601, when the combination of the identifying information of the mobile node 101 and the information of the connectable ISP associated and stored in the storing unit 602 does not have a predetermined validity period, the transmitting unit 600 transmits the identifying information of the mobile node 101 and the information of the connectable ISP to the wireless base station device 104b and transmits the identifying information of the wireless base station device 104b that is the new connection party, included in the user information request, to the authentication device 102 (Step 5902). After the transmitting unit 600 transmits the identifying information of the mobile node 101 and the information of the connectable ISP to the wireless base station device 104b, the controlling unit 603 can delete the identifying information of the mobile node 101 and the information of the connectable ISP. As a result of the above, a notification can be issued from the authentication device 102 to the wireless base station device. Therefore, the tracking of changes in the information of the connectable ISP and the like due to contract changes and the like can be achieved.

In Fig. 8 and Fig. 9, the operational flow of the wireless base station device 104a that is the wireless base station device to which the mobile node 101 had been connected before movement, when the combination of the identifying information of the mobile node 101 and the information of the connectable ISP is provided with the validity period and is not provided with the validity period, is described. Hereafter, an operational flow of the wireless base station device, such as the wireless base station device 104b, to which the mobile node 101 is connected after movement, when the validity period is provided and not provided, will be described with reference to Fig. 10 and Fig. 11. Hereafter, the wireless base station device 104b is given as an example in the explanation. However, the same applies to the wireless base station device 104a and the wireless base station device 104c as to the wireless base station device 104b. Therefore, explanations thereof are omitted.

First, the operational flow of the wireless base station device (also referred to as the post-movement wireless base station device) 104b that is the new connection party, when the combination of the identifying information of the mobile node 101 and the information of the connectable ISP is provided with the validity period, will be described with reference to Fig. 10. When the connection from the wireless base station device, such as the wireless base station device 104a, to which the mobile node 101 had been connected is terminated as a result of the mobile node 101 having moved, the receiving unit 601 receives the identifying information (old LE-ID) of the wireless base station device 104a from the mobile node 101 (Step S1001). Based on the received identifying information of the wireless base station device 104a, the transmitting unit 600 transmits the user information request to the wireless base station device 104a (Step S1002). The user information request is the acquisition request for the information of the connectable ISP and includes the identifying information of the mobile node 101. The receiving unit 601 receives the information of the connectable ISP to which the mobile node 101 had been connected and the identifying information of the mobile node 101 from the wireless base station device 104a as the user information notification (Step 51003). When the validity period of the combination of the identifying information of the mobile node 101 and the information of the connectable ISP held by the wireless base station device 104a has expired, the wireless base station device 104a again issues the authentication request to the authentication device 102. Then, the receiving unit 601 receives the identifying information of the mobile node 101 that has been authenticated and the information of the connectable ISP from the wireless base station device 104a.

The controlling unit 603 stores the received identifying information of the mobile node 101 and the information of the connectable ISP in the storing unit 602 (Step S1004) . The transmitting unit 600 transmits the access network reception notification to the mobile node 101 (Step S1005). The access network reception notification includes the identifying information of the wireless base station device 104b and the information of the connectable ISP. The receiving unit 601 receives the ISP[1] connection request from the mobile node 101 (Step S1006). The ISP [1] connection request includes information of, for example, the ISP [1] 103a that is a connectable ISP. The controlling unit 603 judges whether information that is the same as the information of the ISP[1] 103a included in the received ISP[1] connection request is present in the storing unit 602 storing the information of the connectable ISP (Step S1007) . When judged that the information is present, the controlling unit 603 generates the identifying information (VLAN-ID) of the local path dedicated to the ISP[1] 103a to which the connection is desired (Step S1008) . The local path is laid between the wireless base station device 104b itself and the mobile node 101. The transmitting unit 600 transmits the generated identifying information (VLAN-ID) of the local path to the mobile node 101 as the ISP[1] connection request reception notification (Step S1009). The controlling unit 603 stores the generated identifying information (VLAN-ID) of the local path in the storing unit 602 (Step S 1010). When judged that the information is not present at Step S1007, the control device 603 issues a notification that the identifying information of the local path cannot be generated (Step S1011).

Next, the operational flow of the wireless base station device 104b that is the new connection party, when the combination of the identifying information of the mobile node 101 and the information of the connectable ISP is not provided with the validity period, will be described with reference to Fig. 11. When the connection from the wireless base station device, such as the wireless base station device 104a, to which the mobile node 101 had been connected is terminated as a result of the mobile node 101 having moved, the receiving unit 601 receives the identifying information (old LE-ID) of the wireless base station device 104a from the mobile node 101 (Step S1101). Based on the received identifying information of the wireless base station device 104a, the transmitting unit 600 transmits the user information request to the wireless base station device 104a (Step S1102). The user information request is the acquisition request for the information of the connectable ISP and includes the identifying information of the wireless base station device 104b itself and the identifying information of the mobile node 101.

The receiving unit 601 receives the identifying information of the mobile node 101 and the information of the ISP to which the mobile node 101 can be connected from the wireless base station device 104a as the user information notification (Step S1103). The controlling unit 603 stores the received identifying information of the mobile node 101 and the information of the ISP to which the mobile node 101 can be connected in the storing unit 602 (Step S1104). The transmitting unit 600 transmits the access network reception notification to the mobile node 101 (Step S1105). The access network reception notification includes the identifying information of the wireless base station device 104b itself and the information of the connectable ISP. The receiving unit 601 receives the ISP[1] connection request from the mobile node 101 (Step S1106) . The ISP [1] connection request includes the information of, for example, the ISP[1] 103a that is a connectable ISP.

The controlling unit 603 judges whether information that is the same as the information of the ISP [1] 103a, included in the received ISP[1] connection request, is present in the storing unit 602 storing the information of the connectable ISP (Step S1107). When judged that the information is present, the controlling unit 603 generates the identifying information (VLAN-ID) of the local path dedicated to the ISP[1] 103a to which the connection is desired. The local path is laid between the wireless base station device 104b itself and the mobile node 101. The transmitting unit 600 transmits the generated identifying information (VLAN-ID) of the local path to the mobile node 101 as the ISP[1] connection request reception notification (Step S1109) . The controlling unit 603 stores the generated identifying information (VLAN-ID) of the local path in the storing unit 602 (Step S1110). When judged that the information is not present at Step S1007, the control device 603 issues a notification that the identifying information of the local path cannot be generated (Step S1111).

Next, the operational flow of the mobile node performing communication by connecting to the wireless base station device of the access network system according to the embodiment of the present invention will be described, with reference to Fig. 12. When the mobile node 101 communicates with the communication party (not shown) of the ISP, a receiving unit (not shown) of the mobile node 101 receives a beacon or the like emitted by the wireless base station device, such as the wireless base station device 104a (Step S1201) . At this time, a controlling unit (not shown) of the mobile node 101 judges whether the identifying information of the wireless base station devices to which the mobile node 101 had been connected in the past, stored in a storing unit (not shown) of the mobile node 101, and the received identifying information (LE-ID) of the wireless base station device 104a match (Step S1202). When judged that the information do not match, the controlling unit stores the received identifying information of the wireless base station device 104a (Step S1203). The transmitting unit (not shown) of the mobile node 101 transmits the access network authentication request to the wireless base station device 104a for authenticating by the authentication device 102 whether the mobile node 101 can connect to the access network to perform communication with the communication party (not shown) of the ISP (Step S1204). The packet of the access network authentication request includes the received identifying information (LE-ID) of the wireless base station device 104a and its own (mobile node 101) identifying information stored in the storing unit.

Then, when the result of the authentication by the authentication device 102 is that the connection is possible, the receiving unit of the mobile node 101 receives notification that the connection is possible from the wireless base station device 104a as the access network reception notification (Step S1205). Based on the received access network reception notification, the transmitting unit of the mobile node 101 transmits, for example, the ISP[1] connection request including the information of the ISP[1] 103a, to which the connection is desired, to the wireless base station device 104a (Step 51206) . When the connection request is accepted by the wireless base station device 104a, the receiving unit of the mobile node 101 receives the identifying information of the local path laid between the wireless base station device 104a and the mobile node 101 (Step S1207). The controlling unit of the mobile node 101 stores the received identifying information of the local path in the storing unit (Step S1208). The transmitting unit of the mobile node 101 selects the identifying information of the path, attaches the local tag, and transmits the ISP[1] authentication request to the wireless base station device 104a to allow the authentication device (not shown) on the ISP[1] 103a side to perform the authentication of whether the connection can be made with the ISP [1] 103a corresponding with the selected identifying information of the local path (Step S1209). The ISP[1] authentication request includes the selected identifying information of the local path. At this time, the NE 106 can include the identifying information of the local path in the ISP[1] authentication request.

The operational flow of the mobile node when the mobile node 101 connects with the wireless base station device that is the next connection party as a result of movement will be described, with reference to Fig. 13. When the mobile node 101 changes connection from the wireless base station device to which connection has been made up to this point, such as the wireless base station device 104a, to the wireless base station device that is the new connection party, such as the wireless base station device 104b, the transmitting unit of the mobile node 101 transmits the identifying information (old LE-ID) of the wireless base station device 104a stored in the predetermined storing area to the wireless base station device 104b (Step S1301). Then, the receiving unit of the mobile node 101 receives the access network reception notification from the wireless base station device 104b (Step S1302). The access network reception notification includes the identifying information of the wireless base station device 104b and the information of the connectable ISP.

Based on the received access network reception notification, the controlling unit of the mobile node 101 updates the identifying information of the wireless base station device 104a stored in the storing unit with the identifying information of the wireless base station device 104b (Step S1303) . The transmitting unit of the mobile node 101 selects the ISP to which the connection can be made, such as the ISP [1] 103a, as the connection party and transmits the ISP [1] connection request to the wireless base station device 104b (Step S1304). The TSP[1] connection request includes the information of the ISP[1] 103a to which the connection is desired. The receiving unit of the mobile node 101 receives the identifying information (VLAN-ID) of the local path dedicated to the ISP[1] 103a to which the connection is desired (Step S1305) from the wireless base station device 104b. The local path is laid between the wireless base station device 104b and the mobile node 101. The controlling unit of the mobile node 101 stores the received identifying information (VLAN-ID) of the local path in the storing unit (Step S1306). A configuration in which the mobile node 101 itself performs processes is described in Fig. 12 and Fig. 13. However, the network connection device(NE) 106 can perform the above-described processes, and the mobile node 101 can perform the same processes by merely connecting with the network connection device 106. As a result, the mobile node 101 that does not have the network connection function can be given the network connection function by connecting with the network connection device 106.

Each functional block used in the explanations of the embodiment of the present embodiment, described above, can be actualized as a Large Scale Integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI.

The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used.

Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

The access network system, the base station device, the network connection device, the mobile node, and the authentication method according to the present invention can reduce the load of connection authentication of the connection to the access network, upon dividing the authentication into the connection authentication of the connection to the access network and the connection authentication of the connection to the external IP network.
Therefore, the access network system, the base station device, the network connection device, the mobile node, and the authentication method according to the present invention is effective in an access network system for performing connection authentication of case of network connection, a base station device configuring the access network system, a network connection device, a mobile node, an authentication method, and the like.

## Claims

1. An access network system including a plurality of base station devices that can be connected to a mobile node through wireless communication and an authentication device authenticating a connection of the mobile node to a network, the access network system comprising:
a first base station device connected to the mobile node, receiving a first authentication request from the mobile node, transmitting the first authentication request to the authentication device, and receiving a first authentication result from the authentication device; and
a second base station device newly connected to the mobile node by movement of the mobile node after the mobile node and the first base station device are connected, receiving a second authentication request including identifying information of the first base station device from the mobile node, and transmitting the second authentication request to the first base station device;
wherein, the first base station device transmits the first authentication result to the second base station device upon receiving the second authentication request.

2. The access network system according to claim 1, wherein, when the first authentication result has a predetermined validity period, the first base station device judges whether the validity period has expired, transmits the first authentication result to the second base station device when the validity period has not expired, and transmits an authentication request to the authentication device when the validity period has expired and transmits a second authentication result received from the authentication device to the second base station device.

3. An access network system according to claim 1, wherein, when the first authentication result does not have a predetermined validity period, the first base station device transmits the first authentication result to the second base station device and identifying information of the second base station device in the second authentication request, to which the second base station device has included its own identifying information, to the authentication device.

4. The access network system according to claim 2, wherein, after the first authentication result or the second authentication result is transmitted to the second base station device, the first base station device deletes the first authentication result or the second authentication result.

5. The access network system according to claim 3, wherein, after the first authentication result is transmitted to the second base station device, the first base station device deletes the first authentication result.

6. The access network system according to any one of claims 1 to 5, further including a connection station device connected to an external IP network to relay communication between the mobile node and a correspondent node on the external IP network and having a path between the base station device and the connection station device, wherein:
when the second base station device that has received the first authentication result or the second authentication result transmits information stating that a connection to the network is possible to the mobile node and receives a connection request for obtaining permission to connect with the external IP network from the mobile node, the second base station device generates identifying information of a path between the mobile node and the second base station itself, corresponding to a path connecting to the external IP network to which the connection is desired, and transmits the generated identifying information of the path to the mobile node.

7. The access network system according to claim 6, wherein, when a packet including the generated identifying information of the path is received from the mobile node, the second base station device judges whether the identifying information of the path is valid identifying information assigned to an authenticated mobile node and forwards the packet to the external IP network based on the result.

8. A base station device, among base station devices of an access network system including a plurality of base station devices that can be connected to a mobile node through wireless communication and an authentication device authenticating a connection of the mobile node to a network, of which a connection is terminated as a result of a movement of the mobile node, the base station device comprising:
a receiving means for receiving information;
a transmitting means for transmitting information;
a storing means for storing a first authentication result obtained by the authentication device based on a first authentication request from the mobile node; and
a controlling means for controlling processes performed within the base station device itself;
wherein, the receiving means receives a second authentication request from a base station device the mobile node has newly connected to, and
the transmitting means transmits the first authentication result stored in the storing means to the base station device the mobile node has newly connected to , based on the received second authentication request.

9. The base station device according to claim 8, wherein:
when the first authentication result has a predetermined validity period,
the controlling means judges whether the validity period has expired;
when the controlling means judges that the validity period has not expired, the transmitting means transmits the first authentication result to the base station device the mobile node has newly connected to and, when judged that the validity period has expired, the transmitting means transmits an authentication request to the authentication device and transmits a second authentication result received from the authentication device, via the receiving means, to the base station device the mobile node has newly connected to.

10. The base station device according to claim 8, wherein:
when the first authentication result does not have a predetermined validity period,
the transmitting means transmits the first authentication result to the base station device the mobile node has newly connected to and identifying information which the base station device the mobile node has newly connected to inserts in the second authentication request to the authentication device.

11. The base station device according to claim 9, wherein:
after the transmitting means transmits the first authentication result or the second authentication result to the base station device the mobile node has newly connected to,
the controlling means deletes the first authentication result or the second authentication result.

12. The base station device according to claim 10, wherein:
after the transmitting means transmits the first authentication result to the base station device the mobile node has newly connected to,
the controlling means deletes the first authentication result.

13. A base station device, among base station devices in an access network system including a plurality of base station devices that can be connected to a mobile node through wireless communication, an authentication device authenticating a connection of the mobile node to a network, and a connection station device connected to an external IP network to relay communication between the mobile node and correspondent nodes on the external IP network, and having a path between the base station device and the connection station device, of which a connection is made as a result of a movement of the mobile node, the base station device comprising:
a receiving means for receiving information;
a transmitting means for transmitting information;
a storing means for storing information; and
a controlling means for controlling processes performed within the base station device;
wherein, when the receiving means receives a first authentication result obtained by the authentication device from a previous base station device mobile node connected to, based on an authentication request made to the previous base station device mobile node connected to before the movement of the mobile node, or a second authentication result obtained by re-authentication performed by the authentication device when the validity period of the first authentication result having a validity period has expired,
the transmitting means transmits information stating that the network is connectable to the mobile node,
the controlling means generates identifying information of a path between the mobile node and the base station device itself, corresponding to a path to the external IP network to which the connection is desired, as a result of a connection request for obtaining permission to connect with the external IP network received from the mobile node, via the receiving means, and
the transmitting means transmits the generated identifying information of the path to the mobile node.

14. The base station device according to claim 13, wherein:
the controlling means judges whether the identifying information of the path in a packet including the generated identifying information of the path received from the mobile node, via the receiving means, is valid identifying information assigned to an authenticated mobile node; and
the transmitting means forwards the packet to the external IP network based on the result.

15. A network connection device that can be wirelessly connected to an access network system including a plurality of base station devices, wherein:
the access system includes
an authentication device authenticating a connection of the network connection device to a network,
a first base station device connected to the network connection device, receiving a first authentication request from the network connection device, transmitting the first authentication request to the authentication device, and receiving a first authentication result from the authentication device, and
a second base station device newly connected to the network connection device by movement of the network connection device after the network connection device and the first base station device are connected, receiving a second authentication request including identifying information of the first base station from the network connection device, and transmitting the second authentication request to the first base station device, and
wherein, the first base station device transmits the first authentication result to the second base station device upon receiving the second authentication request; and
the network connection device includes a transmitting means for transmitting the second authentication request including identifying information of the first base station device to the second base station device.

16. The network connection device according to claim 15, further comprising:
a receiving means for receiving the first authentication result for the second authentication request from the second base station device,
wherein, the transmitting means transmits a connection request to an external IP network to the second base station device, after the receiving means receives the first authentication result from the second base station device,
the receiving means receives the identifying information of a path between the second base station device and the network connection device, generated by the second base station device based on the connection request, from the second base station device, and
the transmitting means transmits a connection authentication request for the connection to the external IP network, including the identifying information of the path, to the second base station device, after the receiving means receives the identifying information of the path.

17. A mobile node including the network connection device according to claim 15 or 16.

18. An authentication method in an access network system including a plurality of base station devices that can be connected to a mobile node through wireless communication and an authentication device authorizing the mobile node to connect to a network, wherein:
the access network system includes
a first base station device connected to the mobile node, receiving a first authentication request from the mobile node, transmitting the first authentication request to the authentication device, and receiving a first authentication result from the authentication device; and
a second base station device newly connected to the mobile node by movement of the mobile node after the mobile node and the first base station device are connected, receiving a second authentication request including identifying information of the first base station device from the mobile node, and transmitting the second authentication request to the first base station device; and
the authentication method includes a step that the first base station device transmits the first authentication result to the second base station device when the first base station device receives the second authentication request.

19. The authentication method according to claim 18, including a step wherein:
when the first authentication result has a predetermined validity period, the first base station device judges whether the validity period has expired, transmits the first authentication result to the second base station device when the validity period has not expired, and transmits an authentication request to the authentication device when the validity period has expired and transmits a second authentication result received from the authentication device to the second base station device.

20. The authentication method according to claim 18, including a step, wherein:
the first base station device transmits the first authentication result to the second base station device and identifying information of the second base station device in the second authentication request, to which the second base station device has inserted its own identifying information, to the authentication device, when the first authentication result does not have a predetermined validity period.

21. The authentication method according to claim 19, including a step, wherein:
the first base station device deletes the first authentication result or the second authentication result, after the first authentication result or the second authentication result is transmitted to the second base station device.

22. The authentication method according to claim 20, including a step, wherein:
the first base station deletes the first authentication result, after the first authentication result is transmitted to the second base station device.

23. The authentication method according to any one of claims 18 to 22, including a step, wherein:
the authentication method is in an access network system further including a connection station device connected to an external IP network to relay communication between the mobile node and correspondent nodes on the external IP network and having a path between the base station device and the connection station device; and
when the second base station device that has received the first authentication result or the second authentication result transmits information stating that the network is connectable to the mobile node and receives a connection request for obtaining permission to connect to the external IP network from the mobile node, the second base station device generates identifying information of a path between the mobile node and the second base station device itself, corresponding to a path to the external IP network to which the connection is desired, and transmits the generated identifying information of the path to the mobile node.

24. The authentication method according to claim 23, including a step, wherein:
when a packet including the generated identifying information of the path is received from the mobile node, the second base station device judges whether the identifying information of the path is valid identifying information assigned to an authenticated mobile node, and based on the result, forwards the packet to the external IP network.
